# EUROPEAN PATENT APPLICATION

(11) **EP 1 466 957 A1**
(43) Date of publication of application: **13.10.2004**
(21) Application number: 02796797.5
(22) Date of filing: 17.12.2002
(51) Int. Cl.: C10G 1/10, B01J 37/03, B01J 23/16

(54) **CATALYST FOR IMPROVING SYNTHETIC OILS WHICH ARE GENERATED FROM WASTE POLYMER MATERIAL**

(30) Priority: 19.12.2001 ES 200102829
(71) Applicant: CONSEJO SUPERIOR DE INVESTIGACIONES CIENTIFICAS, 28006 Madrid (ES)
(72) Inventor: MASTRAL LAMARCA, Ana, Insto. Carboquimica, 50015 Zaragoza (ES); MURILLO VILLUENDAS, Ramon, Insto. Carboquimica, 50015 Zaragoza (ES)
(74) Representative: Ungria Lopez, Javier
(86) International application number: PCT/ES2002/000604
(87) International publication number: WO 2003/052030

(57) **Abstract**

The invention relates to a catalyst for improving synthetic oils which are obtained from the processing of waste polymer materials, primarily waste tyres. The aforementioned catalyst contains Mo as the main species supported on a porous material. Said porous material is preferably the residual carbon black resulting from the process used to obtain synthetic oils from tyres and having a preferred particle size of 0.05-0.015 nm. The catalyst precursor is obtained at ambient temperature, with the precursor salt depositing on the carbon black by stirring the carbon black suspension into the aqueous metal salt solution, said salt precipitating on the carbon black when the precipitating agent bubbles through the solution. By means of filtering, the resulting solid material constitutes the precursor salt of the catalyst which is transformed during the thermal oil-improving process into the active catalytic species.

## Description

### BACKGROUND OF THE INVENTION

### Field of the Invention

The invention is related to the improvement of oils obtained by reprocessing of non-biodegradable materials, and in particular to the reprocessing of materials containing rubber. More specifically, the invention is related to the improvement of oils from rubber, especially waste tyres, by means of a thermal catalytic treatment.

### Description of the Prior Art

In recent years, environmental regulations have become ever more restrictive with regard to waste and the processing of non-biodegradable waste materials. Regulations have led to a growing interest in reprocessing and recycling of waste materials, such as plastics, paper, rubber and other combustible materials, in order to obtain new reusable and valuable materials and products instead of simply burning those waste materials as has been done for many decades.

Waste materials containing rubber, and especially tyres, are produced in enormous quantities and a large, if not the major, portion of them are currently simply scattered or burned, causing harm to the environment, and there is no recovery of their potentially valuable components in order to achieve a sustainable development.

One way of reprocessing plastics, paper, rubber and other substantially combustible materials which is finding an ever greater interest, concerns their transformation into oils

There are currently several systems available for processing waste materials. So, Huggins et al., Energy and Fuels, vol. 8, page 1228 (1994) have described a method according to which the waste plastic from bottles of fruit juice, milk bottles and other similar materials are processed by liquefaction, by means of which oils are obtained. In Mastral et al., Fuel Processing Technology vol 60, p. 230 (1999), similar methods to those used in the liquefaction of coal are described, to obtain synthetic oils from the processing of tyres.

Another method, by means of which coal and/or rubber are processed, obtaining acceptable yields of synthetic oils, has been described by A.M. Mastral et al., Energy and Fuels, vol. 14, p. 739 (2000), in which the influence of the variables of the process on the nature of synthetic oils from tyres is described.

The methods according to which waste materials are subjected to pyrolysis have been described by Williams et al., Proceeding of the Institution of Mechanical Engineers. Part C, 55, 207 (1993) in relation to the economic aspects of subjecting waste tyres to pyrolysis, and by Font et al., Energy and Fuels, vol. 8, p. 1238 (1994) in relation to the pyrolysis of plastics in an inert atmosphere.

The previously known methods cited here for processing waste rubber materials and, especially, waste tyres, have not turned out to be entirely satisfactory since they require relatively high energy inputs and the oils that are obtained do not have the ideal content in fractions in terms of petrochemistry.

### DESCRIPTION OF THE INVENTION

It is an object of the present invention to solve the drawbacks of oils coming from the processing of waste tyres and other waste rubber materials, providing a catalytic precursor which not only produces improved synthetic oils but also certain contents in commercial fractions that can be used as fuel in some combustions.

It is another object of the invention to provide a catalytic precursor that can be obtained in a simple way without excessive investments in installations.

It is another object of the invention to use a residue from the process of obtaining synthetic oils from tyre rubber, carbon black, as a support for the catalyst.

It is yet another object of the invention to provide a new type of catalyst that is not expensive, which is easy to acquire and is substantially innocuous from an environmental point of view, and which is capable of effectively reducing the hydrogen sulphide in the gases formed during the reaction.

The objects mentioned above are achieved by means of a method for producing improved synthetic oils by an improvement regarding the catalytic aspect of the synthetic oils, coming from the processing of waste rubber materials, especially waste tyres, in the presence of the catalytic precursor dispersed on carbon black, which is the object of the invention.

Specifically, the present invention reduces the noxious effects on the environment, since it permits the recovery of a residue as catalytic support.

The catalyst consists of dissolving the metal salt, with a percentage between 0.5 % and 5 % in the metal species, preferably between 0.5 and 4 %, and even more preferably between 0.5 % and 2 %, in water and stirring, adding carbon black, with a preferred particle size of 0.5-0.3, preferably 0.05-0.3, and even more preferably 0.45-0.015 nm, to the aqueous solution of the metal salt so as, keeping the suspension vigorously stirred and bubbling the precipitating agent through the suspension, precipitating and dispersing the oxythiosalt on the carbon black acting as catalytic support.

The catalytic precursor is obtained at temperatures between 5 and 50 °C, preferably between 15 and 35 °C, and in times that vary between 10 min. and 2 hours, even more preferably between 10 min. and 60 min.

The solution is filtered and the precursor obtained in the form of a solid supported on the carbon black, is vacuum dried.

A catalytic precursor is thus obtained which is transformed into the catalytically active species, that improves the quality of the synthetic oils when the two are processed in a reactor at a temperature of between 300 and 500 °C, preferably between 350 and 450 °C and even more preferably between 375 and 450 °C, during 3-180 minutes, preferably during 10-40 minutes and even more preferably during 10-30 minutes, at a hydrogenating pressure of between atmospheric pressure and 10 MPa, preferably between 5 and 10 MPa. The pressure can also lie between 5 and 7.5 MPa of hydrogen.

During the processing stage, gases are generated containing CO and CO₂ and C₁-C₄ hydrocarbons. The gases have an average calorific value and can circulate to a conventional heat exchanger in order to provide heat for the rubber processing reaction. Moreover, a portion of these gases can be burned as fuel in order to provide heat for the reaction.

The catalytic precursor contributes to the reduction of emissions of H₂S since it fixes the sulphur as sulphide, thus extending the active period of the catalyst.

The materials containing Mo and which are suitable as catalysts in the method of the invention are any material containing Mo and which contains it in an oxidation state such that it is soluble in water.

The Mo catalyst can contain Mo in different oxidation states as catalytic precursor. The Mo precursor is transformed into Mo sulphide by means of which the hydrogen sulphide (H₂S) content is reduced in the gases generated by the reaction since, owing to the temperature and the partial pressure of H₂S, there exists a reduction of the oxidised state to the sulphide state.

The improved oils obtained by catalytic improvement of the synthetic oils are mostly composed of saturated hydrocarbons and are useful as fuels and/or chemicals.

## Claims

1. A catalytic precursor for producing improved synthetic oils by means of processing of the synthetic oils in its presence, comprising the following stages:
a first stage of aqueous dissolution of a soluble Mo salt
a second stage of precipitation of the catalytic precursor in the form of oxythiosalt of Mo and dispersion on carbon black
a third stage of filtering and vacuum drying of the catalytic precursor at ambient temperature
a fourth stage of mixing the catalytic precursor with the synthetic oils to be improved
a fifth stage of transformation of the precursor into the active catalytic species, the catalyst, by processing the precursor/synthetic oils mixture in the reactor at a temperature between 300 and 500 °C, during 3-180 minutes, at a pressure between atmospheric pressure and 10 MPa, in order to obtain the improved oils.

2. A catalytic precursor in accordance with claim 1, wherein the active species, the catalyst, is formed in situ in hydrogenating atmospheres at the temperature of the process, capable of effectively reducing the hydrogen sulphide content in the gases formed during the improvement process of the oils, which is dispersed in carbon black as catalytic support.

3. A catalyst in accordance with claim 1, wherein the precursor containing Mo as catalyst contains Mo in an oxidation state capable of being reduced.

4. A catalyst in accordance with claim 3, wherein the Mo is dispersed in the form of a salt in carbon black.

5. A catalyst in accordance with claim 1, wherein the precursor containing Mo is added to the improvement process of the oils in a proportion lying between 0.5 % and 2 % by weight on the basis of metallic Mo, in relation to the total weight of oils to improve.

6. A catalyst in accordance with claim 1, wherein catalytically they have between 50 and 60 % of saturated hydrocarbons, between 35 and 45 % of aromatic hydrocarbons and between 5 and 7 % of polar hydrocarbons.

7. A catalyst in accordance with claim 1, wherein the catalytically improved oils contain between 5 and 25 % of Naphtha fraction, between 7 and 20 % of Kerosene fraction and between 10 and 20 % of Gas-Oil fraction.

8. A catalyst for improving oils in accordance with claim 1, wherein the pressure applied during the catalytic improvement lies between 5 and 7.5 MPa.

9. A catalyst in accordance with claim 1, wherein the temperature of the catalytic improvement process lies between 300 and 500 °C.

10. A catalyst in accordance with claim 1, wherein the time of the catalytic improvement process lies between 3 and 180 minutes.

11. The improved oils obtained in accordance with any of claims 1 to 10.

12. Use of the improved oils in accordance with claim 11, among others, as fuel and/or chemicals.
